# EUROPÄISCHE PATENTANMELDUNG

(11) **EP 1 878 515 A1**
(43) Veröffentlichungstag der Anmeldung: **16.01.2008**
(21) Anmeldenummer: 06117070.0
(22) Anmeldetag: 12.07.2006
(51) Int. Cl.: B21D 31/02, B21D 28/34

(54) **Batteriewand-Perforationsvorrichtung**

(71) Anmelder: Christoph Burckhardt AG, 4019 Basel (CH)
(72) Erfinder: Theodor Burckhardt, 4144 Alresheim (CH); Christoph Ulmer, 4054 Basel (CH); Thomas Jermann, 4123 Allschwil (CH); Francis Wisson, 68300 St. Louis (FR)
(74) Vertreter: von Kirschbaum, Alexander

(57) **Zusammenfassung**

Eine Batteriewand-Perforationsvorrichtung weist zwei Perforationseinrichtungen (10, 22) auf. Jede Perforationseinrichtung weist eine Grundplatte (12) sowie eine parallel zu dieser angeordnete Stabilisierungsplatte (14) auf. Die Grundplatte ist fest mit einer Vielzahl von Perforationsnadeln (16) verbunden. Die Perforationsnadeln (16) sind zueinander parallel und in einem Abstand angeordnet.

## Beschreibung

Die Erfindung betrifft eine Batteriewand-Perforationsvorrichtung.

Batterien, insbesondere wiederaufladbare Batterien, wie beispielsweise Nickel-Cadmium Batterien weisen eine perforierte, d. h. mit Löchern versehene Batteriewand auf. Dies dient zur Verbesserung des Ionenaustausches zwischen dem Elektrolyten und dem umgebenden Medium. Üblicherweise weist eine wiederaufladbare Batterie zwei derartige, insbesondere aus gefalzten Stahlbändern hergestellte Batteriewände auf. Zwischen diesen beiden Batteriewänden befindet sich das Elektrolyt. Die Öffnungen der perforierten Batteriewände weisen einen Durchmesser von etwa 0,2 mm auf. Die Perforation der Batteriewände erfolgt durch das Eindrücken von Nadeln, so dass die Löcher durch Kaltverformung hergestellt werden. Dies bewirkt eine Verfestigung der Batteriewand. Neben dem Ionenaustausch zwischen dem Elektrolyten und dem umgebenden Medium dienen die Öffnungen in den Batteriewänden ferner dazu, das Elektrolyt, wie die Kaliumhydroxid Masse festzuhalten.

Zur Herstellung der Batteriewand werden Perforationsnadeln verwendet. Hierbei wird eine Vielzahl von Perforationsnadeln miteinander verbunden, indem die Nadeln aneinander geklebt werden. Hierdurch entsteht ein Nadelverbund, in dem die Nadelschafte unmittelbar aneinander anliegen. Das Aufeinanderkleben der Nadeln erfolgt manuell. Für den Perforationsprozess ist es wichtig, dass die Perforationseinrichtung stets die gleiche Maße aufweisen. Die Perforationsnadeln werden je Perforationseinrichtung in einer Fassung oder einem Rahmen positioniert. Auf Grund der bestehenden Toleranzen bei den Nadelndurchmessern können zum Füllen der Fassung bzw. des Rahmens nicht nur Nadeln mit dem gleichen Durchmesser verwendet werden. Vielmehr ist es erforderlich, Perforationsnadeln mit zwei unterschiedlichen Schaftdurchmessern zu verwenden, um die Fassung bzw. den Rahmen vollständig zu füllen. Hierzu werden bei dem Aufeinanderkleben der Perforationsnadeln zwei Nadeln mit unterschiedlichen Schaftdurchmessern verwendet.

Neben dem erheblichen Herstellungsaufwand derartiger Perforationseinrichtungen weisen diese ferner den Nachteil auf, dass die Ausrichtung und die Lage der einzelnen Perforationsnadeln variieren kann. Dies führt dazu, dass einzelne Nadelspitzen abrechen und das Werkzeug einem erhöhten Verschleiß ausgesetzt ist. Die Lebensdauer derartiger Perforationseinrichtungen beträgt daher nur ein bis sechs Stunden, wobei die Herstellung der Batteriewände durch Perforation von Endlos-Stahlbändern erfolgt. Die mit einer Geschwindigkeit von ca. 5,2 m/min bewegt werden. Die entsprechende Perforationseinrichtung führt hierbei ca. 1700 Hübe pro Minute durch.

Aufgabe der Erfindung ist es, eine Batteriewand-Perforationseinrichtung zu schaffen, deren Lebensdauer erhöht ist.

Die Lösung der Aufgabe erfolgt erfindungsgemäß durch eine Batteriewand-Perforationsvorrichtung gemäß Anspruch 1.

Die erfindungsgemäße Batteriewand-Perforationsvorrichtung weist eine Perforationseinrichtung mit einer Grundplatte auf. Mit der Grundplatte ist eine Vielzahl von Perforationsnadeln fest verbunden. Hierzu weist die Grundplatte beispielsweise für jede Nadel eine Öffnung, insbesondere eine Durchgangsöffnung auf, in die die Nadel eingesteckt und in der Öffnung beispielsweise durch Verklemmen oder Verkleben fixiert wird. Durch das Vorsehen einer Grundplatte können die einzelnen Perforationsnadel in einer definierten Lage angeordnet werden. Dies kann insbesondere durch das Vorsehen von einzelnen Öffnungen in der Grundplatte für jede Perforationsnadel erzielt werden. Erfindungsgemäß sind die einzelnen Perforationsnadeln zueinander parallel angeordnet und weisen einen insbesondere konstanten Abstand zueinander auf. Dadurch das sich die einzelnen Perforationsnadeln erfindungsgemäß nicht berühren, sondern einen Abstand zueinander aufweisen, ist der auftretende Verschleiß, sowie insbesondere die auftretenden Querkräfte und somit das Risiko des Nadelbruchs, verringert. Insbesondere kann in den Zwischenräumen zwischen der Perforationsnadel Abrieb der Nadeln und/oder der perforierten Batteriewand aufgenommen werden. Hierdurch ist die Lebensdauer weiter verbessert. Durch das erfindungsgemäße Vorsehen einer Grundplatte, die die Vielzahl von Perforationsnadeln trägt, können diese exakt ausgerichtet werden. Die Gefahr das einzelne Nadeln schräg stehen ist somit verringert. Hierdurch ist das Risiko des Nadelbruchs erheblich verringert. In der einfachsten Ausführungsform weist die Perforationsvorrichtung somit ausschließlich eine Perforationseinrichtung auf.

In einer besonders bevorzugten Ausführungsform ist zusätzlich zur Grundplatte eine Stabilisierungsplatte vorgesehen. Die Stabilisierungsplatte ist in einem Abstand zur Grundplatte, insbesondere parallel zu dieser angeordnet. Der Abstand ist vorzugsweise größer als 0,5 cm. Insbesondere ist die Stabilisierungsplatte zwischen der Grundplatte und den Nadelspitzen angeordnet. Die einzelnen Perforationsnadeln ragen hierbei vorzugsweise durch Öffnungen der Stabilisierungsplatte hindurch, wobei vorzugsweise für jede Nadel einen gesonderte Öffnung vorgesehen ist. Vorzugsweise sind die Perforationsnadeln fest mit der Stabilisierungsplatte verbunden. Dies kann durch Einpressen oder Einkleben der Perforationsnadel in die einzelnen Öffnungen erfolgen. Besonders bevorzugt ist es, dass die Grundplatte und die Stabilisierungsplatte identisch ausgebildet sind. Hierdurch kann die Parallelität der einzelnen Perforationsnadeln zueinander verbessert werden. Dies erhöht wiederum die Lebensdauer.

Vorzugsweise weist auch die Grundplatte Öffnungen zur Aufnahme der Nadeln, insbesondere Durchgangsöffnungen auf, wobei wiederum für jede einzelne Nadel eine gesonderte Öffnung vorgesehen ist.

Da die einzelnen Nadeln erfindungsgemäß eine definierte Position haben, und die Masse der Perforationseinrichtung exakt vorherbestimmbar ist, ist es nicht erforderlich, Perforationsnadeln mit unterschiedlichen Schaftdurchmessern vorzusehen. Vielmehr können bei der erfindungsgemäßen Perforationseinrichtung Nadeln mit identischen Schaftdurchmessern vorgesehen werden. Vorzugsweise werden Nadeln mit einem Schaftdurchmesser von 0,2 bis 0,5 mm, insbesondere 0,35 mm, verwendet. Die Perforationsnadeln sind vorzugsweise aus Stahl.

Vorzugsweise bilden die Perforationsnadeln ein Nadelfeld von 0,3 bis 1,0 cm². Jedes Nadelfeld weist hierbei 300 bis 500 Nadeln pro cm² auf.

Eine Perforationseinrichtung weist beispielsweise sieben Reihen an Perforationsnadeln mit jeweils 28 Nadeln auf. Die andere Perforationseinrichtung weist, um die Nadeln der einander gegenüberliegenden Perforationseinrichtungen auf Lücke anordnen zu können, in diesem Beispiel sechs Reihen mit je 27 Perforationsnadeln auf. Die beiden einander gegenüberliegenden Perforationseinrichtungen weisen somit insgesamt 358 Perforationsnadeln auf.

Der Abstand der Perforationsnadeln ist erfindungsgemäß größer 0, insbesondere größer 0, 2 mm und besonders bevorzugt größer 0,4 mm. Besonders bevorzugt ist ein Abstand im Bereich von 0,4 bis 0,6 mm.

Bei einer besonders bevorzugten Ausführungsform weist die Batteriewand-Perforationsvorrichtung zwei einander gegenüberliegende Perforationseinrichtungen auf. Hierbei weisen die Nadelspitzen der Perforationsnadel aufeinander zu. Zwischen den beiden Perforationseinrichtungen ist im Herstellungsprozess die zu perforierende Batteriewand, bei der es sich beispielsweise um ein Stahlband handelt, angeordnet. Hierbei sind die beiden Perforationscinrichtungen vorzugsweise derart angeordnet, dass die einander gegenüberliegenden Nadelspitzen auf Lücke stehen. Insbesondere sind die Perforationseinrichtungen derart angeordnet, dass eine Nadel der einen Perforationseinrichtung mittig zwischen vier Nadeln der anderen Perforationseinrichtung angeordnet ist. Um eine Batteriewand mit symmetrischen bzw. gleichmäßig angeordneten Perforationslöchern zu erhalten, weist eine Perforationseinrichtung vorzugsweise eine Reihe weniger Nadeln auf, als die gegenüberliegende zweite Perforationseinrichtung.

Vorzugsweise ist jede Perforationseinrichtung jeweils mit einer Aufnahmeeinrichtung zum Halten der Perforationseinrichtung verbunden. Insbesondere kann ein Halten der Perforationseinrichtung durch Greifen der Grund- und/oder Stabilisierungsplatte erfolgen. Zum Herstellen der Perforationslöcher in der Batteriewand sind die beiden Aufnahmeeinrichtungen relativ zueinander bewegbar. Vorzugsweise sind beide Aufnahmeeinrichtungen derart bewegbar, dass die Nadelspitzen gleichzeitig auf die Batteriewand bzw. das zu perforierende Stahlband auftreffen, um ein Verbiegen des Stahlbandes zu vermeiden.

Durch die erfindungsgemäße Ausgestaltung der Perforationseinrichtungen können die Standzeiten erheblich erhöht werden. Durch die Verwendung der erfindungsgemäßen Perforationsvorrichtungen ist es möglich, zu Schichtbeginn sämtliche Perforationseinrichtungen einmal auszuwechseln und diese sodann während der gesamten Schicht nicht mehr wechseln zu müssen. Hierdurch kann die Produktivität erheblich gesteigert und der Personalaufwand erheblich reduziert werden. Auch die Herstellung der einzelnen Perforationseinrichtungen ist erheblich vereinfacht und automatisierbar. Da die Lebensdauer der einzelnen Perforationseinrichtungen erheblich verlängert ist, können die Kosten erheblich reduziert werden

Erfindungsgemäß dient somit die vorstehend beschriebene Perforationseinrichtung sowie die vorstehend beschriebene Perforationsvorrichtung zu Verwendung bei der Herstellung von Batteriewänden.

Nachfolgend wird die Erfindung anhand einer bevorzugten Ausführungsform unter Bezugnahme auf die anliegenden Zeichnungen näher erläutert.

Es zeigen:
- Figur 1: eine schematische Seitenansicht einer Perforationseinrichtung,
- Figur 2: eine schematische Schnittansicht entlang der Linie II-II in Fig. 1,
- Figur 3: eine schematische Seitenansicht einer Perforationsvorrichtung und
- Figur 4: eine schematische Draufsicht einer mit der in Fig. 3 dargestellten Perforationsvorrichtung perforierten Batteriewand.

Eine bevorzugte erfindungemäße Ausführungsform einer Perforationseinrichtung 10 weist eine im Querschnitt rechteckige Grundplatte 12 auf. Zu der Grundplatte 12 ist parallel eine identisch ausgebildete Stabilisierungsplatte 14 vorgesehen. Sowohl die Grundplatte 12 als auch die Stabilisierungsplatte 14 weisen Durchgangsöffnungen auf, durch die die Perforationsnadeln 16 hindurch gesteckt sind. Ein stumpfes Ende 18 der Perforationsnadeln ragt somit über eine Rückseite der Grundplatte vor. Ein spitzes Ende 20 der Perforationsnadeln ragt über die Stabilisierungsplatte 14 vor. Die Perforationsnadeln 16 sind derart angeordnet, dass sämtliche Spitzen 20 in einer Ebene liegen.

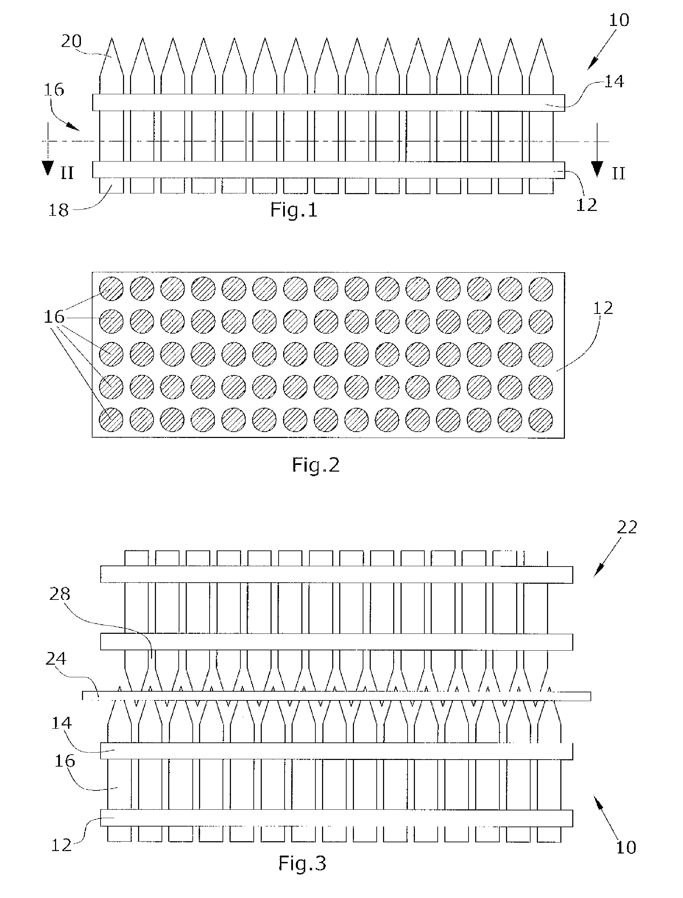

Bei der ersten Perforationseinrichtung 10 (Fig. 1 und 2) weist die Grundplatte 12 fünf Reihen an Perforationsnadeln 16 auf. Sämtliche Perforationsnadeln 16 sind identisch und in einem konstanten Abstand zueinander angeordnet. Der Abstand der Perforationsnadeln 16 ist sowohl innerhalb der Reihe als auch innerhalb der Spalten konstant.

Eine Perforationsvorrichtung weist zwei Perforationseinrichtungen 10, 22 auf. Die zweite Perforationseinrichtung 22 ist prinzipiell entsprechend der ersten Perforationseinrichtung 10 aufgebaut. Sie weist ebenfalls eine Grundplatte 12 sowie eine Stabilisierungsplatte 14 auf, die entsprechend der ersten Perforationseinrichtung 10 eine Vielzahl von Nadeln 16 aufnehmen. Der einzige Unterschied besteht darin, dass die Perforationseinrichtung 22 nur vier Reihen an Nadeln aufweist und zusätzlich jede Nadelreihe eine Nadeln weniger enthält. Die einander gegenüberliegenden Nadeln 16 der beiden Perforationseinrichtungen 10, 22 sind derart angeordnet, dass die Nadelspitzen 20 auf Lücke zueinander stehen. Die Nadelspitzen der Perforationseinrichtung 22 sind somit stets in der Mitte zu vier Nadeln der Perforationseinrichtung 10 angeordnet.

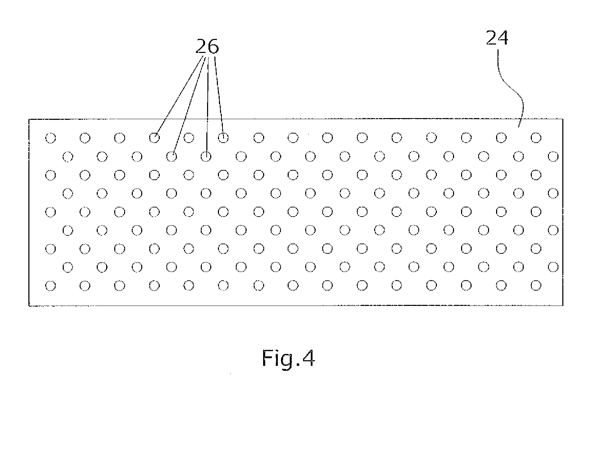

Jede Perforationseinrichtung 10, 22 ist in einer Aufnahmeeinrichtung auswechselbar gehalten. Zur Herstellung einer Batteriewand 24 können die Perforationseinrichtung 10, 22 relativ zueinander bewegt werden. Insbesondere werden zur Perforation der Batteriewand 24 beide Perforationseinrichtungen 10, 22 aufeinander zu bewegt. Auf Grund der Anordnung der Nadeln der Perforationseinrichtungen 10, 22 auf Lücke entsteht die in Fig. 4 dargestellte Perforation der Batteriewand 24. Die einzelnen Löcher bzw. Öffnungen 26 der Batteriewand 24 weisen einen konstanten Abstand zueinander auf.

Zwischen den Perforationsnadeln 16 ist ein Abstand vorgesehen. Hierdurch ist ein Abrieb-Aufnahmeraum 28 ausgebildet.

## Patentansprüche

1. Batteriewand-Perforationsvorrichtung, mit
einer eine Grundplatte (12) aufweisenden Perforationseinrichtung (10, 22), und
einer Vielzahl fest mit der Grundplatte (12) verbundenen Perforationsnadeln (16),
wobei die Perforationsnadeln (16) parallel und in einem Abstand zueinander angeordnet sind.

2. Batteriewand-Perforationseinrichtung nach Anspruch 1, **dadurch gekennzeichnet, dass** der Abstand aller Perforationsnadeln (16) konstant ist.

3. Batteriewand-Perforationseinrichtung nach Anspruch 1 oder 2, **dadurch gekennzeichnet, dass** die Perforationseinrichtung (10, 22) eine in einem Abstand zur Grundplatte (12) angeordnete Stabilisierungsplatte (14) aufweist.

4. Batteriewand-Perforationseinrichtung nach Anspruch 3, **dadurch gekennzeichnet, dass** die Perforationsnadeln (16) durch Öffnungen der Stabilisierungsplatte (14) hindurch ragen.

5. Batteriewand-Perforationseinrichtung nach einem der Ansprüche 1 bis 4, **dadurch gekennzeichnet, dass** die Grundplatte (12) zur Aufnahme der Perforationsnadeln (16) Öffnungen, insbesondere Durchgangöffnungen aufweist.

6. Batteriewand-Perforationseinrichtung nach einem der Ansprüche 1 bis 5, **dadurch gekennzeichnet, dass** die Grundplatte (12) und die Stabilisierungsplatte (14) identisch ausgebildet sind.

7. Batteriewand-Perforationseinrichtung nach einem der Ansprüche 1 bis 6, **dadurch gekennzeichnet, dass** alle Perforationsnadeln (16) identisch sind.

8. Batteriewand-Perforationseinrichtung nach einem der Ansprüche 1 bis 7, **gekennzeichnet durch**, zwei einander gegenüberliegend angeordnete Perforationseinrichtungen (10, 22) deren Nadelspitzen (20) der Perforationsnadeln (16) aufeinander zuweisen, um eine zwischen den Perforationseinrichtungen (10, 22) angeordnete Batteriewand (24) zu perforieren.

9. Batteriewand-Perforationseinrichtung nach Anspruch 8, **dadurch gekennzeichnet, dass** die Perforationsnadeln (16) der beiden Perforationseinrichtungen (10, 22) zueinander auf Lücke angeordnet sind.

10. Batteriewand-Perforationseinrichtung nach einem der Ansprüche 8 oder 9, **gekennzeichnet durch**, jeweils eine Aufnahmeeinrichtung für jeweils eine Perforationseinrichtung (10, 22), wobei die Aufnahmeeinrichtungen relativ zueinander bewegbar sind.

11. Batteriewand-Perforationseinrichtung nach einem der Ansprüche 1 bis 10, **dadurch gekennzeichnet, dass** der Abstand der Perforationsnadeln (16) als Abrieb-Aufnahmeraum (28) dient.

## Geänderte Patentansprüche

### Geänderte Patentansprüche gemäss Regel 137(2) EPÜ.

**1.** Batteriewand-Perforationvorrichtung, mit
einer eine Grundplatte (12) aufweisenden Perforationseinrichtung (10, 22),
einer Vielzahl fest mit der Grundplatte (12) verbundenen Perforationsnadeln (16),
wobei die Perforationsnadeln (16) parallel und in einem Abstand zueinander angeordnet sind,
**dadurch gekennzeichnet,**
**dass** die Perforationseinrichtung (10, 22) eine in einem Abstand zur Grundplatte (12) angeordnete Stabilisierungsplatte (14) aufweist,
wobei die Perforationsnadeln (16) fest mit der Stabilisierungsplatte (14) verbunden sind.

**2.** Batteriewand-Perforationsvorrichtung nach Anspruch 1 oder 2, **dadurch gekennzeichnet, dass** der Abstand aller Perforationsnadeln (16) zueinander konstant ist.

**3.** Batteriewand-Perforationsvorrichtung nach Anspruch 1 oder 2, **dadurch gekennzeichnet, dass** die Perforationsnadeln (16) durch Öffnungen der Stabilisierungsplatte (14) hindurch ragen.

**4.** Batteriewand-Perforationsvorrichtung nach einem der Ansprüche 1 bis 3, **dadurch gekennzeichnet, dass** die Grundplatte (12) zur Aufnahme der Perforationsnadeln (16) Öffnungen, insbesondere Durchgangöffnungen aufweist.

**5.** Batteriewand-Perforationsvorrichtung nach einem der Ansprüche 1 bis 4, **dadurch gekennzeichnet, dass** die Grundplatte (12) und die Stabilisierungsplatte (14) identisch ausgebildet sind.

**6.** Batteriewand-Perforationsvorrichtung nach einem der Ansprüche 1 bis 5, **dadurch gekennzeichnet, dass** alle Perforationsnadeln (16) identisch sind.

**7.** Batteriewand-Perforationsvorrichtung nach einem der Ansprüche 1 bis 6, **gekennzeichnet durch** zwei einander gegenüberliegend angeordnete Perforationseinrichtungen (10, 22) deren Nadelspitzen (20) der Perforationsnadeln (16) aufeinander zuweisen, um eine zwischen den Perforationseinrichtungen (10, 22) angeordnete Batteriewand (24) zu perforieren.

**8.** Batteriewand-Perforationsvorrichtung nach Anspruch 7, **dadurch gekennzeichnet, dass** die Perforationsnadein (16) der beiden Perforationseinrichtungen (10, 22) zueinander auf Lücke angeordnet sind.

**9.** Batteriewand-Perforationsvorrichtung nach einem der Ansprüche 7 oder 8 **gekennzeichnet durch**, jeweils eine Aufnahmeeinrichtung für jeweils eine Perforationseinrichtung (10, 22), wobei die Aufnahmeeinrichtungen relativ zueinander bewegbar sind.

**10.** Batteriewand-Perforationsvorrichtung nach einem der Ansprüche 1 bis 9, **dadurch gekennzeichnet, dass** der Abstand der Perforationsnadeln (16) 0,4 - 0,6 mm beträgt.
